# EUROPÄISCHE PATENTSCHRIFT

(11) **EP 2 208 633 B1**
(45) Veröffentlichungstag und Bekanntmachung des Hinweises auf die Patenterteilung: **22.06.2011**
(21) Anmeldenummer: 09175142.0
(22) Anmeldetag: 05.11.2009
(51) Int. Cl.: B60N 2/16, B60N 2/50, B60N 2/68

(54) **Scherengestell für einen Fahrzeugsitz, Fahrzeugsitz, insbesondere Kraftfahrzeugsitz, und Verfahren zum Herstellen eines Unterbaus eines Fahrzeugsitzes**
Scissor-type stand for a vehicle seat, vehicle seat, in particular motor vehicle seat, and method for producing a sub-structure of a vehicle seat
Structure en ciseaux pour un siège de véhicule, siège de véhicule, notamment siège de véhicule automobile, et procédé de fabrication d'un bâti d'un siège de véhicule

(30) Priorität: 06.11.2008 DE 102008056200
(43) Veröffentlichungstag der Anmeldung: 21.07.2010
(73) Patentinhaber: GRAMMER AG, 92224 Amberg (DE)
(72) Erfinder: Deml, Johann, 92554, Thanstein (DE); Dieling, Erich, 92277, Hohenburg (DE); Kohl, Josef, 92242, Hirschau (DE); Lorey, Alexander, 93142, Maxhütte-Haidhof (DE); Renner, Manfred, 92237, Sulzbach-Rosenberg (DE)
(74) Vertreter: Hannke, Christian

(56) Entgegenhaltungen:
- EP-A2- 0 563 948
- WO-A1-2004/110808
- DE-A1-102004 026 036
- DE-A1-102006 017 774
- DE-A1-102007 009 170
- DE-A1-102008 018 509
- DE-B3-102008 015 614
- DE-C1- 4 335 199
- DE-U1-202007 009 795
- DE-U1-202008 002 339
- GB-A- 1 491 292

## Beschreibung

Die Erfindung betrifft ein Scherengestell für einen Fahrzeugsitz, insbesondere für einen Kraftfahrzeugsitz, umfassend ein erstes Scherenelement und ein weiteres Scherenelement, wobei das Scherengestell mittels der beiden Scherenelemente höheneinstellbar ist. Darüber hinaus betrifft die Erfindung einen Fahrzeugsitz, insbesondere einen Kraftfahrzeugsitz, mit einem Unterbau. Des Weiteren betrifft die Erfindung ein Verfahren zum Herstellen eines Unterbaus eines Fahrzeugsitzes, insbesondere eines Kraftfahrzeugsitzes, bei welchem ein erstes Scherenelement mit einem weiteren Scherenelement eines Scherengestells des Unterbaus drehbeweglich verbunden wird, (siehe z.B. EP 0 563 948 B1, dem Oberbegriff entsprechend).

Gattungsgemäße Scherengestelle sind aus dem Stand der Technik bekannt und haben sich insbesondere im Bereich des Kraftfahrzeugwesens vielfach bewährt. Hierbei dienen sie nicht nur als Höheneinstellung eines Sitzes in einem Kraftfahrzeug sondern auch als Federung, um insbesondere den Sitzkomfort für einen Fahrzeugführer zu erhöhen bzw. einen guten Sitzkomfort zu gewährleisten, beispielsweise wenn das Fahrzeug auf unebenem Untergrund bewegt wird.

Oftmals sind höhenverstellbare Fahrzeugsitze auch mit einer Luftfeder versehen, wobei eine derartige Luftfeder mittels Zusatzvolumina, welche meistens außerhalb der Luftfeder angeordnet sind, in ihrer Federwirkung beeinflusst werden können. Beispielsweise kann ein erforderliches Luftzusatzvolumen in einem ersten Anschlagsbereich der Luftfeder hinein gepumpt werden, um hierdurch einen Dämpfungsgrad der Feder entsprechend zu erhöhen und die Luftfeder nicht bis zu ihrem Anschlag durchschlagen zu lassen. Kumulativ oder alternativ kann ein Luftzusatzvolumen aus einem gegenüberliegenden Anschlagsbereich entnommen und gegebenenfalls in einen Zusatzvolumentank geleitet werden. Hierdurch ergeben sich vielfältige Einstellmöglichkeiten. Somit ist bei derartigen Luftfedern für Fahrzeugsitze oftmals mindestens ein externer zusätzlicher Zusatzvolumentank erforderlich, der mittels weiterer Luftanschlüsse mit der Luftfeder als separate Einheit verbunden werden muss. Derartige Zusatzvolumentanks müssen als zusätzliche Elemente innerhalb des Fahrzeugsitzes angeordnet werden und erfordern somit zusätzlichen Platzbedarf.

Häufig sind jedoch derartig höhenverstellbare Fahrzeugsitze auf Grund der angestrebten Komprimierung ihrer Teile zur Verringerung ihres Platzbedarfs innerhalb des Fahrzeuges immer kleiner in ihrem Grundgestell ausgebildet, woraus sich das Problem des Vorhandenseins eines ausreichenden Platzvolumens für einen derartigen Zusatzvolumentank ergibt.

Hervorzuheben ist ferner, dass bislang bekannte Scherengestelle für Fahrzeugsitze mit größeren Federungen und größeren Federwegen ausschließlich mehrteilige Schwingen mit eingeschweißten Achsen oder Rohren für die Lagerung vorsahen, wodurch insbesondere die Gefahr von Fertigungstoleranzen meist zunimmt.

Beispielsweise offenbart die Druckschrift DE 10 2006 017 774 A1 einen Fahrzeugsitz mit einem höhenverstellbaren Sitzgestell, welches zumindest zwei relativ zueinander bewegliche Sitzgestellteile und zumindest eine zwischen den Sitzgestellteilen zur Höhenverstellung angeordnete Gasfeder aufweist, wobei zumindest eine zur Beeinflussung der Gasfeder vorgesehene Steuereinrichtung vorgesehen ist. Die Steuereinrichtung weist zumindest eine an einem ersten Sitzgestellteil angebrachte Ventileinrichtung mit Steuerventilen zum Ansteuern von Gasströmen für die Gasfeder sowie eine an einem zweiten Sitzgestellteil vorgesehene Steuerkulisse zur Ansteuerung der Steuerventile auf, so dass unabhängig von einer Gewichtsbelastung des Fahrzeugsitzes eine voreinstellbare Höhe des Fahrzeugsitzes gewährleistet ist. Es handelt sich dabei um einen Fahrzeugsitz, bei dem die Steuerkulisse mittels einer Einstelleinrichtung unabhängig von einer relativen Stellung der Sitzgestellteile derart relativbeweglich zum zweiten Sitzgestellteil einstellbar ist, dass eine von der Einstelleinrichtung bewirkte Bewegung der Steuerkulisse relativ zum zweiten Sitzgestellteil eine Höhenverstellung des Fahrzeugsitzes bewirkt. Damit kann zwar in einfacher Weise eine Höhenverstellung des Fahrzeugsitzes verwirklicht werden, jedoch erfordert die Herstellung eines derartigen Sitzes eine vergleichsweise aufwändige, zahlreiche Bauteile umfassende Konstruktion.

Aus der weiteren Druckschrift DE 43 35 199 C1 ist bekannt, einen abgefederten Fahrzeugsitz mit einem Scherengestell bereitzustellen, welches um eine gemeinsame Scherenachse schwenkbare Scherenelemente aufweist. Zum Verstellen des Scherengestells ist eine Gasfeder vorgesehen, mit der eine erste Ventileinrichtung zur Höheneinstellung des Fahrersitzes und über eine Kupplung eine zweite Ventileinrichtung zur gewichtsabhängigen Einstellung der Höhe des Fahrersitzes verbindbar ist. Die Kupplung weist ein um die Scherenachse schwenkbares Segmentelement mit einem bogenförmigen Zahnabschnitt und einen Schwenkarm mit einer mit dem Zahnabschnitt kämmend in Eingriff bringbaren Zahnung auf. Der Schwenkarm ist mit einem der Scherenelemente verbunden und mittels einer Antriebseinrichtung betätigbar, die mit der ersten Ventileinrichtung verbunden ist. An der Scherenachse ist außerdem ein Kulissenelement schwenkbeweglich angeordnet, welches zur Betätigung der zweiten Ventileinrichtung dient und welches relativ zum Segmentelement begrenzt beweglich ist. Auch diese Konstruktion ist recht aufwändig gebaut.

Ein vereinfachter Unterbau für einen Fahrzeugsitz mit einem Scherengestell umfassend zwei schwenkbewegliche Gestellelemente ist in der e.g. europäischen Patentschrift EP 0 563 948 B1 beschrieben. Hierbei sind die beiden schwenkbeweglichen Gestellelemente des Scherengestells nicht fest miteinander verbunden, sondern nur aneinander anliegend. Insofern kann auf eingeschweißte Achsen oder Rohre, die die Lagerung der beiden Gestellelemente zueinander umfassen, verzichtet werden. Hierdurch kann das Scherengestell zwar relativ einfach ausgebildet werden, jedoch bilden die Gestellelemente keine zusammenhängende Einheit, wodurch insbesondere die Montage des Scherengestells nur im Zusammenhang mit einem Grundelement und einer Sitzplatte erfolgen kann. Zudem ist kein Bauraum für einen Luft- bzw. Gasdruckdämpfer vorgesehen.

Aus der weiteren Druckschrift WO 2004/110808 A1 ist ein ebenfalls gattungsgemäßes Scherengestell bekannt, das u.a. ein plattenartiges Gestellelement aufweist.

Es ist Aufgabe der Erfindung, ein gattungsgemäßes Scherengestell wenigstens aus zwei Scherenelementen als kompakte und zusammenhängende Baueinheit bereitzustellen, welche zudem einfach und schnell hergestellt werden kann.

Die Aufgabe der Erfindung wird von einem Scherengestell für einen Fahrzeugsitz, insbesondere für einen Kraftfahrzeugsitz, umfassend ein erstes Scherenelement und ein weiteres Scherenelement gelöst, wobei das Scherengestell mittels der beiden Scherenelemente höheneinstellbar ist, und wobei das Scherengestell sich durch die technischen Merkmale des kennzeichnenden Teils des unabhängigen Vorrichtungsanspruchs 1 auszeichnet.

Dadurch, dass ein erstes Scherenelement ein weiteres Scherenelement durchdringt, kann das Scherengestell insgesamt sehr kompakt und einfach gebaut bereitgestellt werden.

Insbesondere unterscheidet sich das vorliegende Scherengestell von den Scherengestellen aus den Druckschriften DE 10 2006 017 774 A1 und DE 43 35 199 C1 dahingehend, dass vorliegend nur zwei zentral angeordnete Scherenelemente verwendet werden. Auf seitlich angeordnete Scherenelemente kann hierbei vorteilhafter Weise verzichtet werden, wodurch speziell die Anzahl der Scherenelemente verringert werden kann.

Von dem Scherengestell, welches in der europäischen Patentschrift EP 0 563 948 B1 gezeigt ist, unterscheidet sich das erfindungsgemäße Scherengestell insbesondere dadurch, dass vorliegend das erste Scherenelement das zweite Scherenelement durchdringt. Bei dem Scherengestell aus der europäischen Patentschrift EP 0 563 948 B1 wird eines der Gestellelemente von außen an das andere der Gestellelemente heran geführt und dann lediglich an das andere Gestellelement angelehnt, ohne es jedoch zu durchdringen. Vielmehr tangiert das eine Gestellelement das andere Gestellelement nur.

Der Begriff "Scherengestell" beschreibt im Sinne der Erfindung ein Gebilde vorzugsweise eines Unterbaus eines Fahrzeugsitzes, welches zwei Scherenelemente aufweist, die drehbeweglich miteinander verbunden sind. Die beiden Scherenelemente sind hierbei derart miteinander verbunden, dass sie eine zusammenhängende unlösbare Einheit bilden. Auch hierdurch unterscheidet sich das erfindungsgemäße Scherengestell von dem Scherengestell aus der vorstehend erwähnten europäischen Patentschrift, da dort die Scherengestelle nur aneinander anlehnen. Hierbei kann bereits allein das Scherengestell mit seinen zwei Scherenelementen im Wesentlichen den Unterbau des Fahrzeugsitzes bilden.

Die Erfindung gemäß Anspruch 1 bzw. dem Verfahrensanspruch 14 sieht vor, dass eines der beiden Scherenelemente innerhalb einer umlaufend geschlossenen Materialausnehmung des weiteren der beiden Scherenelemente angeordnet ist und dass das weitere Scherenelement des Scherengestells eine derartig umlaufend geschlossene Materialausnehmung aufweist, dass das erste Scherenelement problemlos und platzsparend durch das weitere Scherenelement hindurch gesteckt werden kann. Hierbei können Randbereiche der umlaufend geschlossenen Materialausnehmung auch als eine Art Anschlag verwendet werden, wenn sie entsprechend geformt sind. Insofern kann hierdurch die Betriebssicherheit des Scherengestells und damit auch eines Fahrzeugsitzes erhöht werden.

Weitere Merkmale der Erfindung sind in den abhängigen Vorrichtungsansprüchen angegeben.

Umfasst eines der beiden Scherenelemente das weitere der beiden Scherenelemente, kann ein Scherengestell als besonders kompakte Einheit bereit gestellt werden.

Darüber hinaus ist es vorteilhaft, wenn die beiden Scherenelemente um die gemeinsame Lagerachse, vorzugsweise um eine gemeinsame Steckachse, drehbar gelagert sind. Weist das Scherengestell eine gemeinsame Lagerachse für die beiden Scherenelemente auf, kann das Scherengestell vorteilhafter Weise einteilig ausgebildet werden. Hierdurch kann sich die Handhabung des Scherengestells, etwa bei einer Montage eines Fahrzeugsitzes, wesentlich vereinfachen. Insbesondere eine Steckachse kann seitlich einfach in geeignete Steckachsenaufnahmen der Scherenelemente eingeführt werden.

Die Aufgabe der Erfindung wird auch von einem Verfahren zum Herstellen eines Unterbaus eines Fahrzeugsitzes, insbesondere eines Kraftfahrzeugsitzes, gelöst, bei welchem ein erstes Scherenelement mit einem weiteren Scherenelement eines Scherengestells des Unterbaus drehbeweglich verbunden wird, und bei welchem eines der Scherenelemente durch das weitere der Scherenelemente hindurch gesteckt wird und anschließend beide Scherenelemente unlösbar miteinander verbunden werden.

Mittels eines derartigen Herstellungsverfahrens wird eine Montage eines Scherengestells für einen Fahrzeugsitz besonders einfach durchführbar. Und die Scherenelemente lassen sich unlösbar aber drehbeweglich besonders einfach mittels einer Steckachse miteinander verbinden.

Der Begriff "unlösbar" beschreibt im vorliegenden Zusammenhang, dass die beiden Scherenelemente nicht voneinander abgehoben werden können.

Ist zumindest eines der beiden Scherenelemente, vorzugsweise beide Scherenelemente, aus einem Halbzeug umformend hergestellt, kann das Scherengestell idealerweise ohne

Schweißungen hergestellt werden. Insofern können Probleme hinsichtlich eines Bauteilverzugs auf Grund eines kritischen Wärmeeintrags in die Konstruktion vermieden werden, wodurch auch eine besonders hohe Fertigungsgenauigkeit an den Scherenelementen erzielt werden kann.

Als Halbzeug kann vorliegend ein tiefziehbares und/oder ein stanzbares Blech oder dergleichen verwendet werden. Der Begriff "umformend" beschreibt in diesem Zusammenhang jegliche Prozesse, mittels welchen die Form des Halbzeuges verändert werden kann. Mittels solcher umgeformter Bauteile kann eine besonders homogene Gestalt und damit eine außergewöhnlich gute Belastbarkeit eines Bauteils erzielt werden. Hierdurch können Bauteile, wie etwa die Scherenelemente, bei gleicher Belastbarkeit weniger massiv gegenüber herkömmlichen Gestellelementen ausgebildet werden.

Eine vorteilhafte Ausführungsvariante sieht zudem vor, dass zumindest eines der beiden Scherenelemente, vorzugsweise beide Scherenelemente, als einteiliges Stanzblechund/oder Biegeelement hergestellt ist. Die Scherenelemente können vorliegend somit als schwingenartige Scherenarme jeweils einteilig ausgebildet sein. Vorteilhafter Weise können hierdurch Richtarbeiten, wie bei einer Schweißkonstruktion oftmals erforderlich, vermieden werden. Zudem können sich Stanzblechelemente bzw. Biegeelemente durch eine sehr hohe Bauteilfestigkeit auszeichnen.

Eine Verfahrensvariante sieht somit auch vor, dass insbesondere die Scherenelemente aus Blechen geformt und schweißnahtfrei bereit gestellt werden. Hierdurch kann ein kritischer Wärmeeintrag in die Bleche verhindert werden.

Eine weitere besonders hervorzuhebende Ausführungsvariante sieht vor, dass eines der beiden Scherenelemente eine Durchgangsöffnung für einen Dämpfer des Scherengestells aufweist, durch welche hindurch der Dämpfer anordenbar und/oder angeordnet ist. Weist zumindest ein Scherenelement des Scherengestells eine derartige Durchgangsöffnung für einen Dämpfer auf, kann der Dämpfer wesentlich besser in das Scherengestell integriert werden. Insofern kann das Scherengestell nochmals kompakter gebaut werden.

Insbesondere in diesem Zusammenhang ist es vorteilhaft, wenn das Scherengestell eine Dämpfereinrichtung mit einem Dämpfer aufweist, wobei der Dämpfer ein innerhalb eines ersten Scherenelements angeordnetes weiteres Scherenelement durchdringt. Hierbei kann die Dämpfereinrichtung bzw. der Dämpfer in einem Winkel oder parallel zu demjenigen Scherenelement angeordnet sein, welches von dem weiteren Scherenelement des Scherengestells durchdrungen wird. Insofern kann eine Dämpfereinrichtung umfassendes Scherengestell eines Fahrzeugsitzes auf besonders kleinem Bauraum realisiert werden.

Kumulativ kann das Scherengestell ein oberes Abschlusselement und ein unteres Abschlusselement aufweisen, an welchen einerseits jeweils eines der beiden Scherenelemente mittels eines Drehlagers rotatorisch und an welchen andererseits jeweils eines der beiden Scherenelemente mittels eines Gleitlagers translatorisch gelagert ist, wobei eine Dämpfereinrichtung des Scherengestells an einem der Drehlager, vorzugsweise an dem Drehlager des unteren Abschlusselements, gelagert ist. Sind zusätzlich derartige Abschlusselemente an dem Scherengestell vorgesehen, kann das Scherengestell besser in einen Unterbau eines Fahrzeugsitzes integriert werden. Beispielsweise kann an dem oberen Abschlusselement der eigentliche Fahrzeugsitz befestigt werden. Mittels des unteren Abschlusselements kann das Scherengestell vorteilhaft an einem Bodenblech eines Kraftfahrzeugs montiert werden. Insbesondere wenn die Dämpfereinrichtung an einem vorhandenen Drehlager befestigt ist, kann sich der Aufbau des Scherengestells weiter vereinfachen und sonst notwendige Befestigungselemente einsparen.

Eine derartige Dämpfereinrichtung, insbesondere im Hinblick auf die spezielle Durchgangsöffnung für einen Dämpfer, kann ein herkömmliches Scherengestell bereits positiv weiterentwickeln, so dass die Merkmale im Zusammenhang mit der Dämpfereinrichtung auch ohne die übrigen Merkmale der Erfindung vorteilhaft sind.

Verfahrenstechnisch ist es weiter vorteilhaft, wenn eine Sitzplatte und/oder eine Bodenplatte des Scherengestells aus Blechen geformt und schweißnahtfrei bereit gestellt werden, wobei die Sitzplatte und/oder die Bodenplatte mit den Scherenelementen gelenkig miteinander verbunden werden.

Eine besonders bevorzugte Ausführungsvariante sieht vor, dass das Scherengestell Lagereinrichtungen zum Lagern der Scherenelemente an und/oder in einem Abschlusselement des Scherengestells aufweist, wobei die Lagereinrichtungen jeweils ein Lagerauge und/oder einen Lagerzapfen aufweisen, welcher von einen der Scherenelemente ausgeformt ist. Sind insbesondere die Lagereinrichtungen bzw. Bereiche hiervon, wie etwa Lageraugen bzw. Lagerzapfen, unmittelbar von den Scherenelementen selbst ausgebildet, kann der Aufbau des vorliegenden Scherengestells erheblich weiter vereinfacht werden. Insbesondere kann vorteilhafter Weise auf zusätzliche Bauteile, wie eingeschweißte Achsen und/oder Rohre, für eine Lagerung der Scherenelemente verzichtet werden.

Somit ist es weiter vorteilhaft, wenn das jeweilige Lagerauge und/oder der jeweilige Lagerzapfen einstückig mit einem der Scherenelemente ausgebildet sind. Vorzugsweise ist ein solches Lagerauge oder ein solcher Lagerzapfen angestanzt. Vorteilhafter Weise kann auch auf Verschraubungen hinsichtlich der Lagereinrichtungen verzichtet werden.

Damit insbesondere die Lagerzapfen in hiermit korrespondierenden Lagemuten reibungsarm und dementsprechend besonders gut gleiten können, ist vorteilhaft, wenn der jeweilige Lagerzapfen ein Gleitelement umfasst.

Eine Herstellung des Scherengestells kann weiter vereinfacht werden, wenn das Gleitelement auf den jeweiligen Lagerzapfen aufgesteckt ist. Hierbei können an dem Lagerzapfen sogleich Widerhaken angestanzt sein, so dass das Gleitelement ohne weitere Hilfsmittel verliersicher an dem Lagerzapfen befestigt werden kann. Somit kann auch auf Rollenbahnen, Verstellschienenbefestigungen oder sonstige zusätzliche Lagerbauteile verzichtet werden, wodurch sich die Konstruktion des vorliegenden Scherengestells weiter vereinfachen und platzsparender bereitstellen lässt.

Es versteht sich, dass ein derartiges Gleitelement in unterschiedlichster Gestalt und aus den verschiedensten Werkstoffen hergestellt sein kann. Besonders variationsreich kann das Gleitelement gestaltet werden, wenn das Gleitelement aus Kunststoff hergestellt ist. Zudem wohnen einem Kunststoff im Allgemeinen gute Gleiteigenschaften inne.

Sind der jeweilige Lagerzapfen und/oder ein Gleitelement des jeweiligen Lagerzapfens in Führungseinrichtungen der Abschlusselemente gelagert, wobei die Führungseinrichtungen Materialaussparungen eines oberen Abschlusselementes oder eines unteren Abschlusselementes des Scherengestells sind, kann konstruktiv besonders einfach eine Art Scharnier zwischen den Scherenelementen und den Abschlusselementen realisiert werden. Vorzugsweise sind die Materialaussparungen aus den Abschlusselementen heraus gestanzt.

Mittels einer derartigen Führungseinrichtung in Gestalt einer Materialaussparung kann ein Scherenelement in Längsrichtung eines Abschlusselementes verschoben werden, ohne zusätzliche scharnierartige Bauteile verwenden zu müssen.

Dementsprechend ist es vorteilhaft, wenn das Scherengestell ein oberes Abschlusselement und ein unteres Abschlusselement aufweist, wobei das obere und/oder das untere Abschlusselement Führungseinrichtungen aufweisen, in welchen Lagerzapfen der Scherenelemente gleitend gelagert sind. Hierdurch können die einzelnen Scherenelemente an den Abschlusselementen baulich einfach speziell linear beweglich gelagert werden.

Speziell im Kontext mit den Lagereinrichtungen sieht eine weitere Ausführungsvariante vor, dass das Scherengestell eine Verbindungseinrichtung zum Verbinden eines der Scherenelemente mit einem der Abschlusselemente aufweist, bei welchem ein erstes Verbindungselement von dem Scherenelement und ein weiteres Verbindungselement von dem Abschlusselement ausgeformt ist. In einem einfachen Fall kann es sich bei dem ersten Verbindungselement der Verbindungseinrichtung um einen Lagerzapfen eines Scherenelementes und bei dem weiteren Verbindungselement der Verbindungseinrichtung um eine Führungseinrichtung in Gestalt einer Materialaussparung des Abschlusselementes handeln. Somit kann die Verbindungseinrichtung vorteilhafter Weise ohne zusätzliche Bauteile an dem vorliegenden Scherengestell bereit gestellt werden.

Auch die vorgeschlagene Verbindungseinrichtung kann sehr einfach gestaltet sein, wenn das erste Verbindungselement in dem weiteren Verbindungselement geführt ist.

Des Weiteren sieht eine außergewöhnlich vorteilhafte Ausführungsvariante vor, dass das Scherengestell eine Federeinrichtung mit wenigstens einem Federelement aufweist, wobei das Federelement zwischen einem der Scherenelemente und einem der Abschlusselemente wechselwirkend angeordnet ist. Neben der vorstehend erläuterten Dämpfereinrichtung kann auch eine Federeinrichtung besonders gut in das Scherengestell integriert werden, wenn das Federelement zwischen einem der Scherenelemente und einem der Abschlusselemente wechselwirkend angeordnet ist.

Die Federeinrichtung kann besonders verschleißresistent an einem Scherenelement gelagert und befestigt werden, wenn die Federeinrichtung eine Federaufhängung aufweist, welche an einem Ende eines der Scherenelemente abrollbar angeordnet ist.

Die Federaufhängung besteht aus einem Rohrsegment, das schlussformigen Kontakt zu der/den Fedem(n) bietet und man über die belastete Kante abrollen bzw. kippen kann. Bei den meisten Federaufhängungen kann man Drehbewegungen im Lager nicht ausschließen, was zu großen Belastungen und Abnutzungen an den Lagerstellen führt. Die dargestellte Ausführung ermöglicht nicht nur die Kontaktfläche zu vergrößern (Linien- statt Punktkontakt), sondern lässt gleichzeitig die Reibung durch eine Umwandlung in eine Abroll-Kippbewegung um die Kante minimieren.

Die Federaufhängung kann an dem Scherenelement betriebssicher geführt werden, wenn die Federaufhängung eine Nut aufweist, in welcher das Scherenelement mit einer Lasche hineinragt.

Es versteht sich, dass eine oder mehrere Federelemente nahezu beliebig mit der Federaufhängung korrespondieren können. Weist die Federaufhängung zwei Federendaufnahmen auf, in welchen Federenden von Federelementen einhakbar sind, können die Federelemente sicher an der Federaufhängung gelagert bzw. befestigt werden.

Mittels der vorstehend beschriebenen Federeinrichtung und insbesondere deren Federaufhängung gelingt es auf besonders vorteilhafte Weise eine solche Federeinrichtung platzsparend in ein Scherengestell eines Fahrzeugsitzes zu integrieren. Vorzugsweise liegt die Federeinrichtung bzw. liegen die Federelemente der Federeinrichtung im Wesentlichen parallel zu einem der Abschlusselemente, wodurch die Federeinrichtung besonders platzsparend innerhalb des Scherengestells integrierbar ist. Da allein die Merkmale einer solchen Federeinrichtung herkömmliche Scherengestelle positiv weiterentwickeln können, sind die Merkmale im Zusammenhang mit der vorliegenden Federeinrichtung auch ohne die übrigen Merkmale der Erfindung vorteilhaft.

Auch wird die Aufgabe der Erfindung von einem Fahrzeugsitz, insbesondere von einem Kraftfahrzeugsitz, mit einem Unterbau gelöst, bei welchem der Unterbau ein Scherengestell nach den erläuterten Merkmalen gemäß Anspruch 1 aufweist. Insgesamt kann hierdurch ein Unterbau mit einem in besonders hoher Fertigungsgenauigkeit herstellbaren Scherengestell und vorteilhafter Weise im Wesentlichen ohne zusätzliche Bauteile - bis auf Dreh- und Lagerachsen sowie Gleitlager - zur Verfügung gestellt werden.

Weitere Vorteile, Ziele und Eigenschaften vorliegender Erfindung werden anhand nachfolgender Beschreibung anliegender Zeichnung erläutert, in welcher beispielhaft ein Kraftfahrzeugsitzunterbau mit einem Scherengestell dargestellt ist. Komponenten, welche in den Figuren wenigstens im Wesentlichen hinsichtlich ihrer Funktion übereinstimmen, können hierbei mit gleichen Bezugszeichen gekennzeichnet sein, wobei diese Komponenten nicht in allen Figuren gekennzeichnet und erläutert sein müssen.

Es zeigt
- Figur 1: schematisch eine perspektivische Ansicht eines Scherengestells mit zwei ineinan- der gesteckten und drehbeweglich zueinander gelagerten Scherenelementen;
- Figur 2: schematisch eine Seitenansicht des Scherengestells aus der Figur 1;
- Figur 3: schematisch eine Ansicht eines ersten Scherenelementes aus den Figuren 1 und 2;
- Figur 4: schematisch eine Ansicht eines zweiten Scherenelementes aus den Figuren 1 und 2;
- Figur 5: schematisch eine Ansicht eines oberen Abschlusselementes aus den Figuren 1 und 2;
- Figur 6: schematisch eine Ansicht eines unteren Abschlusselementes aus den Figuren 1 und 2;
- Figur 7: schematisch eine Lageraufnahme eines Drehlagers und eine weitere Lagerauf- nahme einer Steckachse an dem ersten Scherenelement aus der Figur 3;
- Figur 8: schematisch eine Detailansicht der Lageraufnahme des Drehlagers aus der Figur 7;
- Figur 9: schematisch eine weitere Detailansicht der Lageraufnahme mit eingesteckter Drehachse des Drehlagers aus den Figuren 7 und 8;

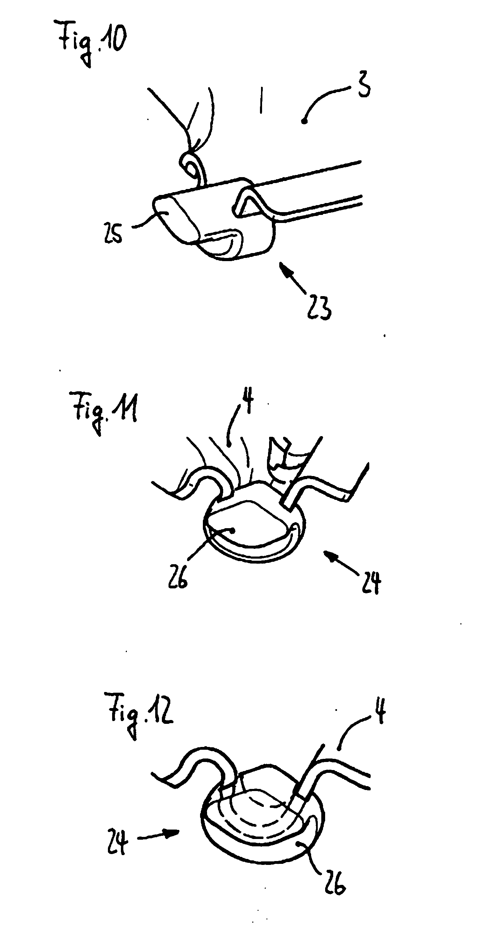

- Figur 10: schematisch eine Ansicht eines Gleitelementes;
- Figur 11: schematisch eine Ansicht eines weiteren Gleitelementes;
- Figur 12: schematisch eine weitere Ansicht des weiteren Gleitelementes aus der Figur 11;
- Figur 13: schematisch eine Ansicht einer Führungseinrichtung des oberen Abschlussele- mentes aus der Figur 5;
- Figur 14: schematisch eine Detailansicht der Führungseinrichtung aus der Figur 13;
- Figur 15: schematisch eine perspektivische Ansicht einer Federaufhängung an dem zweiten Scherenelement aus der Figur 4;
- Figur 16: schematisch eine weitere Ansicht der Federaufhängung aus der Figur 15; und
- Figur 17: schematisch eine geschnittene Ansicht der Federaufhängung aus den Figuren 15 und 16.

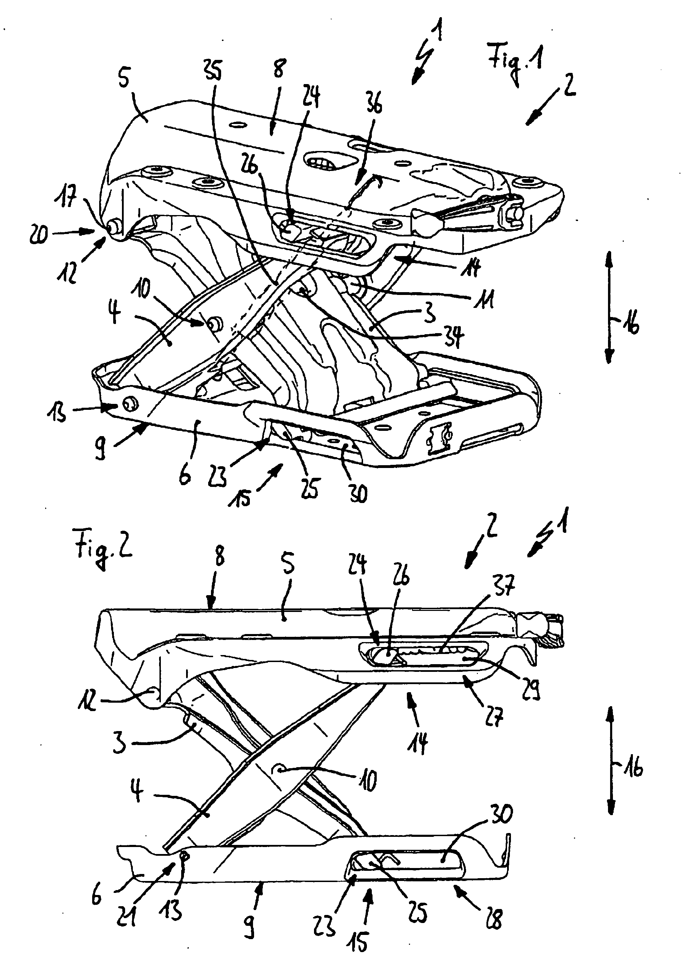

Das in den Figuren 1 und 2 illustrierte Scherengestell 1 bildet einen Unterbau 2 eines hier nicht näher gezeigten Kraftfahrzeugsitzes für einen Fahrzeugführer.

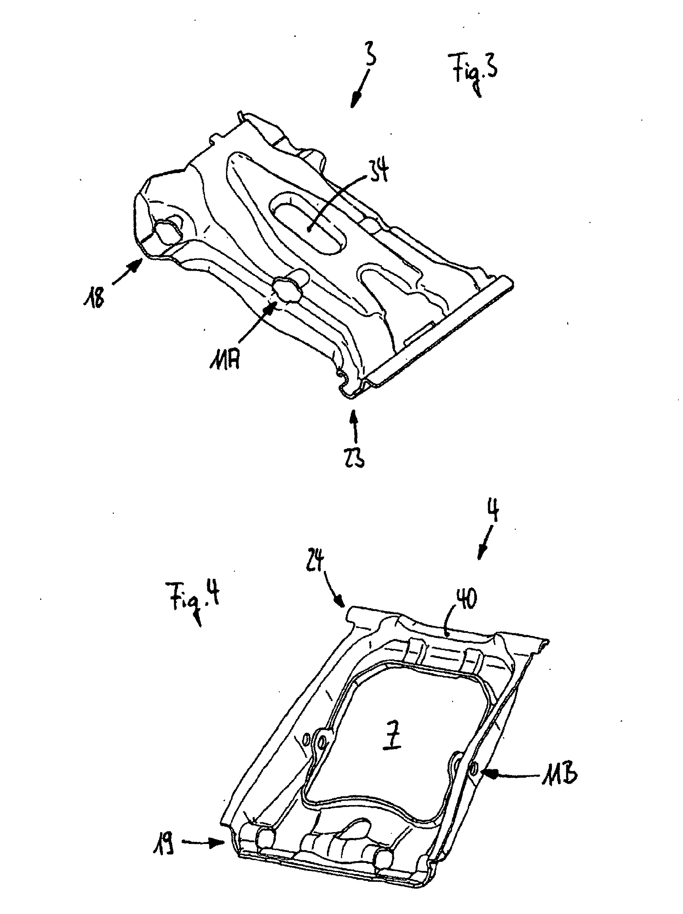

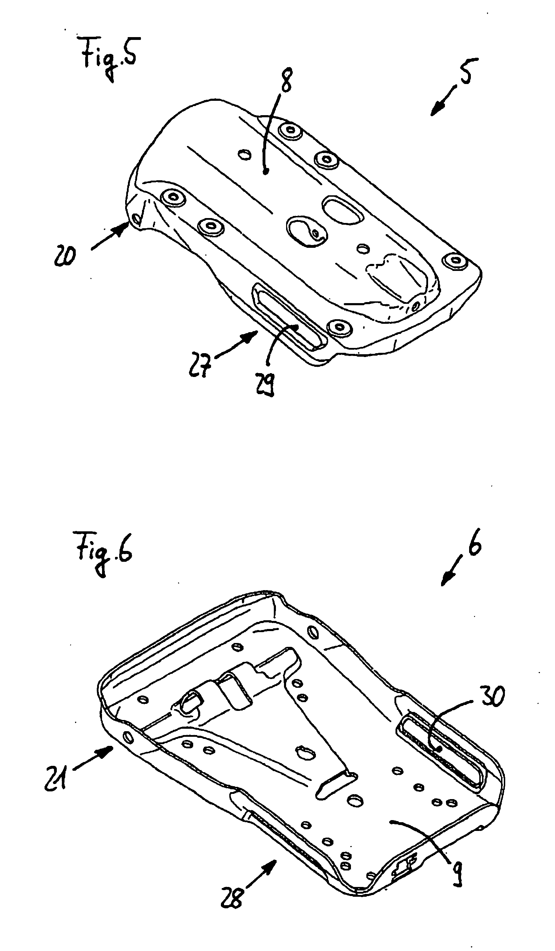

Das Scherengestell 1 besteht im Wesentlichen aus einem ersten Scherenelement 3 (siehe insbesondere Figur 3), einem zweiten Scherenelement 4 (siehe insbesondere Figur 4), einem oberen Abschlusselement 5 (siehe insbesondere Figur 5) und einem unteren Abschlusselement 6 (siehe insbesondere Figur 6).

Hierbei sind die beiden Scherenelemente 3 und 4 derart ausgebildet und zueinander angeordnet, dass das erste Scherenelement 3 das zweite Scherenelement 4 durchdringt, wodurch beide Scherenelemente 3 und 4 auf sehr kleinem Bauraum unter gebracht werden können. Insofern ist der gesamte Unterbau 2 sehr kompakt gebaut.

Damit das erste Scherenelement 3 das zweite Scherenelement 4 problemlos durchdringen kann, weist das zweite Scherenelemente 4 eine entsprechende Materialausnehmung 7 auf, welche umlaufend geschlossen und ringsherum von dem zweiten Scherenelement 4 begrenzt ist. Somit umfasst das zweite Scherenelement 4 das erste Scherenelement 3 zumindest teilweise. Die Materialausnehmung 7 ist hierbei konstruktiv einfach in das zweite Scherenelement 4 eingestanzt.

Insgesamt können die beiden Scherenelemente 3 und 4 besonders einfach hergestellt werden, da sie jeweils aus einem Halbzeug, wie einem Blech, geformt sind. Insofern ist jedes der Scherenelemente 3, 4 als ein einteiliges Stanzblechteil hergestellt, wodurch es eine hohe Festigkeit aufweist. Im Übrigen gilt dies auch für die beiden Abschlusselemente 5 und 6, da diese ebenfalls aus einem Blech geformt sind, wobei das obere Abschlusselement 5 eine Sitzplatte 8 bereitstellt, an welcher der eigentliche Sitz an dem Scherengestell 1 befestigt werden kann. Das untere Abschlusselement 6 bildet eine Bodenplatte 9 des Scherengestells 1 aus, über welche das Scherengestell 1 an einer Fahrzeugkarosserie (hier nicht dargestellt) befestigt werden kann. Insofern können die Scherenelemente 3, 4 und die Abschlusselemente 5, 6 schweißnahtfrei und damit vorteilhafter Weise auch verzugsfrei hergestellt werden.

Die beiden Scherenelemente 3, 4 weisen zudem eine gemeinsame Lagerachse 10 auf, wobei die gemeinsame Lagerachse 10 in diesem Ausführungsbeispiel als einfache Steckachse 11 ausgeführt ist. Mittels der gemeinsamen Steckachse 11 sind die beiden Scherenelemente 3 und 4 unlösbar als kompakte Einheit miteinander verbunden und können nicht einfach voneinander abgehoben werden. Zum Aufnehmen der gemeinsamen Steckachse 11 sind an dem ersten Scherenelement 3 erste Steckachsenaufnahmen 11A (siehe Figur 3) sowie an dem zweiten Scherenelement 4 Steckachsenaufnahmen 11B (siehe Figur 4) vorgesehen, wobei alle Steckachsenaufnahmen 11A bzw. 11B von den Scherenelementen 3 bzw. 4 selbst ausgebildet sind.

Des Weiteren sind die Scherenelemente 3 und 4 mittels Drehlager 12 und 13 rotatorisch beweglich und mittels Gleitlager 14 und 15 translatorisch beweglich an den Abschlusselementen 5 und 6 gelagert. Insofern können die beiden Scherenelemente 3 und 4 zwischen den beiden Abschlusselementen 5 und 6 eine scherenartige Bewegung ausführen, wodurch unter anderem die Höhe 16 des Unterbaus 2 eingestellt werden kann.

Die Drehlager 12 und 13 sind jeweils mittels einer Drehlagerachse 17 (hier nur exemplarisch hinsichtlich des Drehlagers 12 in der Figur 1 beziffert) ausgestattet, so dass die beiden Scherenelemente 3 und 4 drehbeweglich an den Abschlusselementen 5 und 6 befestigt werden können.

Damit die jeweilige Drehlagerachse 17 an den Scherenelementen 3 und 4 konstruktiv sehr einfach gelagert werden kann, bilden die Scherenelemente 3 und 4 jeweils entsprechende Lageraugen 18 (siehe Figur 3) bzw. entsprechende Lageraugen 19 (siehe Figur 4) als Lagereinrichtungen der Scherenelemente 3 und 4 aus. Hierzu korrespondierende weitere Lageraugen 20 bzw. 21 (siehe Figuren 5 und 6) sind an dem jeweiligen Abschlusselement 5 bzw. 6 ausgeformt, welche jeweils Lagereinrichtungen an den Abschlusselementen 5 und 6 bedingen.

Alle Lageraugen 18 bis 21 sind entweder direkt von den Scherenelementen 3 bzw. 4 oder von den Abschlusselementen 5 bzw. 6 ausgebildet, insbesondere an diesen entsprechend ein- bzw. angestanzt. Hierdurch werden vorteilhafter Weise keine zusätzlichen Lagerbauteile benötigt, wodurch das Scherengestell 1 weiter vereinfacht ist.

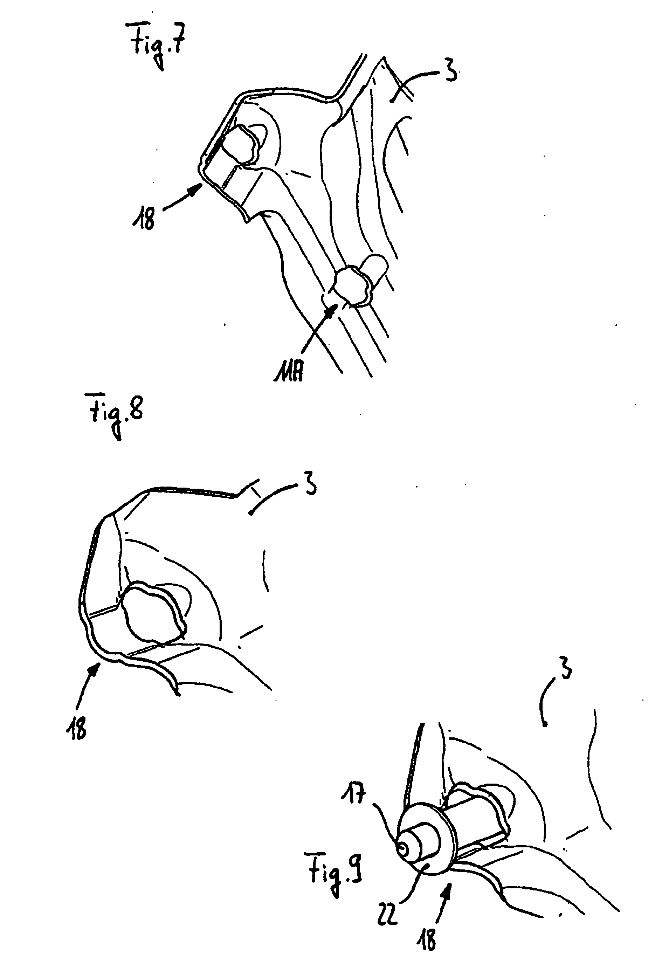

Insbesondere gemäß den Detaildarstellungen nach den Figuren 7, 8 und 9 ist eines der angeformten Lageraugen 18 des ersten Scherenelementes 3 auch mit vorhandener Drehlagerachse 17 (siehe insbesondere Figur 9) gut zu erkennen. An der Drehlagerachse 17 ist noch eine Distanzscheibe 22 angeordnet, welche bei ordnungsgemäßer Montage des Scherengestells 1 zwischen dem ersten Scherenelement 3 und dem oberen Abschlusselement 5 platziert ist, so dass das erste Scherenelement 3 und das obere Abschlusselement 5 nicht direkt aneinander anliegen können.

Die Lageraugen 18, 19, 20 und 21 beschränken sich hierbei nicht nur auf Orte an den Rändern der Scherenelemente 3, 4 bzw. der Abschlusselemente 5, 6, sondern sie sind auch mittig der Scherenelemente 3, 4 bzw. der Abschlusselemente 5, 6 ausgeformt, wie gemäß den Darstellungen nach den Figuren 4 und 6 noch gut zu erkennen ist.

Weiter Lagereinrichtungen der Scherenelemente 3 und 4 sind als Lagerzapfen 23 bzw. 24 (siehe insbesondere Figuren 3 und 4) ausgeformt. Die Lagerzapfen 23, 24 sind hierbei mit Gleitelementen 25 bzw. 26 aus Kunststoff ausgestattet, welche in Führungseinrichtungen 27 bzw. 28 des jeweiligen Abschlusselementes 5 bzw. 6 eingreifen und dort translatorisch geführt sind. Vorteilhafter Weise bestehen die Führungseinrichtungen 27 und 28 jeweils aus Materialaussparungen 29 bzw. 30, welche aus den oberen bzw. unteren Abschlusselementen 5, 6 ausgestanzt sind. Hierdurch sind auch die Führungseinrichtungen 27 und 28 von den Abschlusselementen 5 und 6 gebildet.

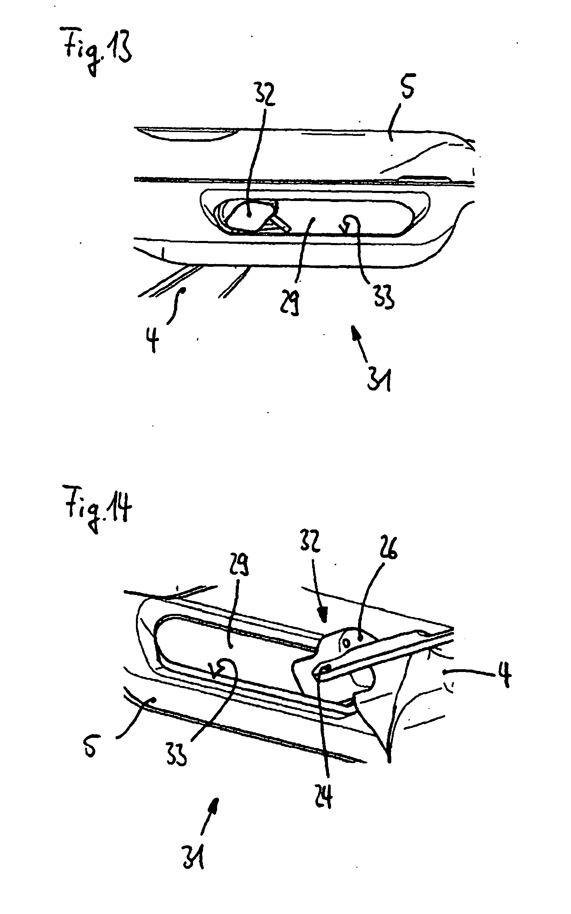

Insbesondere die Lagerzapfen 23, 24 mit ihren Gleitelementen 25, 26 im Zusammenspiel mit den Führungseinrichtungen 27, 28 bilden vorliegend jeweils eine Verbindungseinrichtung 31 (siehe Figuren 13 und 14) zum Verbinden eines der Scherenelemente 3 bzw. 4 mit einem der Abschlusselemente 5 bzw. 6, bei welchem ein erstes Verbindungselement 32, beispielsweise einer der Lagerzapfen 23 oder 24, jeweils von dem Scherenelement 3 bzw. 4 und ein weiteres Verbindungselement 33, beispielsweise eine der Materialaussparungen 29 oder 30, von dem Abschlusselement 5 bzw. 6 ausgeformt ist. Hierbei ist dann das erste Verbindungselement 32 hinsichtlich eines der Scherenelemente 3 bzw. 4 in dem weiteren Verbindungselement 33 hinsichtlich eines der Abschlusselemente 5 bzw. 6 unmittelbar geführt.

Vorteilhafter Weise sind vorliegend alle Lagereinrichtungen, wie Lageraugen 18 bis 21 und Lagerzapfen 23, 24 direkt von den Scherenelementen 3 bzw. 4 und/oder von den Abschlusselementen 5 bzw. 6 ausgebildet.

Besonders kompakt gebaut ist das Scherengestell 1 auch wegen einer aus dem ersten Scherenelement 3 ausgestanzten Durchgangsöffnung 34 für einen Dämpfer 35 (nur in der Figur 1 strichpunktiert eingezeichnet) einer Dämpfereinrichtung 36 des Scherengestells 1, da hierdurch die gesamte Dämpfereinrichtung 36 besonders gut in das Scherengestell 1 integriert werden kann. Hierzu durchdringt der Dämpfer 35 zumindest das erste Scherenelement 3. Vorteilhafter Weise ist der Dämpfer 35 mit seinem unteren Ende unmittelbar an dem Drehlager 13 einfach und kompakt gelagert, während der Dämpfer 35 mit seinem oberen Ende in geeigneter Weise an dem oberen Abschlusselement 5 befestigt ist.

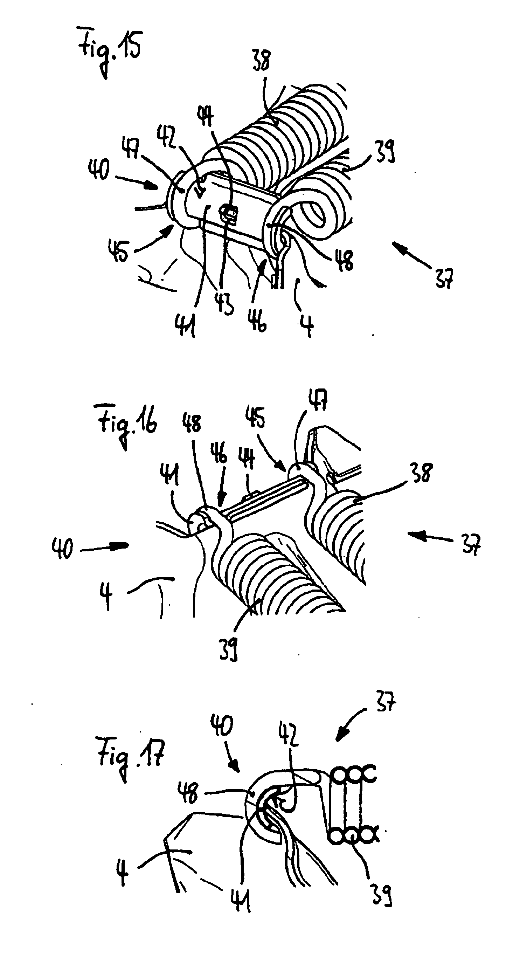

Des Weiteren verfügt das Scherengestell 1 über eine Federeinrichtung 37 (siehe Figuren 1, 15, 16 und 17) mit zwei Federelementen 38 und 39, die zum Einen an dem oberen Abschlusselement 5 und zum Anderen an dem zweiten Scherenelement 4 befestigt sind. Zumindest im Endbereich 40 des zweiten Scherenelementes 4 ist eine an dem Endbereich 40 abrollbare Federaufhängung 41 vorgesehen, wodurch die beiden Federelemente 38, 39 fest aber beweglich an dem zweiten Scherenelement 4 befestigt sind. Hierdurch kann die Federfunktion des Scherengestells 1 wesentlich verbessert werden. So wird nicht nur die Kontaktfläche vergrößert, sondern auch die Reibung durch die Kippbewegung um die Kante ersetzt, was eine Belastung und Abnutzung an den Lagerstellen wesentlich reduziert.

Die Federaufhängung 41 besteht in diesem Ausführungsbeispiel im Wesentlichen aus einem halbrund gebogenen Längskörper 42, der um den Endbereich 40 des zweiten Scherenelementes 4 herum gebogen ist. Als zusätzliche Justierung verfügt die Federaufhängung 41 über eine Nut 43, in welche eine Lasche 44 des zweiten Scherenelementes 4 eingreift. Hierdurch wird insbesondere ein kritisches Verschieben bzw. Verdrehen der Federaufhängung 41 gegenüber dem Endbereich 40 des zweiten Schwenkelelementes 4 verhindert.

Um die Gefahr zu verringern, dass die Federelemente 38, 39 unbeabsichtigt von der Federaufhängung 41 abspringen können, ist die Federaufhängung 41 des Weiteren mit zwei Federendaufnahmen 45 und 46 ausgerüstet, in welchen sich die gebogenen Federenden 47 bzw. 48 der beiden Federelemente 38 bzw. 39 besonders sicher einhaken können.

### Bezugszeichenliste

- 1: Scherengestell
- 2: Unterbau
- 3: erstes Scherenelement
- 4: zweites Scherenelement
- 5: oberes Abschlusselement
- 6: unteres Abschlusselement
- 7: Materialausnehmung
- 8: Sitzplatte
- 9: Bodenplatte
- 10: gemeinsame Lagerachse
- 11: gemeinsame Steckachse
- 11A: erste Steckachsenaufnahmen
- 11 B: zweite Steckachsenaufnahmen
- 12: erstes Drehlager
- 13: zweites Drehlager
- 14: ein erstes Gleitlager
- 15: ein zweites Gleitlager
- 16: Höhe
- 17: Drehlagerachse
- 18: Lageraugen
- 19: Lageraugen
- 20: weitere Lageraugen
- 21: weitere Lageraugen
- 22: Distanzscheibe
- 23: ein erster Lagerzapfen
- 24: ein weiterer Lagerzapfen
- 25: ein erstes Gleitelement
- 26: ein weiteres Gleitelement
- 27: eine erste Führungseinrichtung
- 28: eine weitere Führungseinrichtung
- 29: eine erste Materialaussparung
- 30: eine weitere Materialaussparung
- 31: Verbindungseinrichtung
- 32: erstes Verbindungselement
- 33: weiteres Verbindungselement
- 34: ausgestanzte Durchgangsöffnung
- 35: Dämpfer
- 36: Dämpfereinrichtung
- 37: Federeinrichtung
- 38: erstes Federelement
- 39: zweites Federelement
- 40: Endbereich
- 41: Federaufhängung
- 42: Längskörper
- 43: Nut
- 44: Lasche
- 45: erste Federendaufnahme
- 46: zweite Federendaufnahme
- 47: erstes gebogenes Federende
- 48: zweites gebogenes Federende

## Patentansprüche

1. Scherengestell (1) für einen Fahrzeugsitz, insbesondere für einen Kraftfahrzeugsitz, umfassend ein erstes Scherenelement (3) und ein weiteres Scherenelement (4), wobei das Scherengestell (1) mittels der beiden Scherenelemente (3, 4) höheneinstellbar ist,
**dadurch gekennzeichnet, dass**
eines der beiden Scherenelemente (4) eine innere umlaufend geschlossene Materialausnehmung (7) aufweist, durch welche das andere (3) der beiden Scherenelemente (3, 4) das eine (4) der beiden Scherenelemente (3, 4) durchdringt; wobei beide Scherenelemente (3, 4) unlösbar durch eine gemeinsame Lagerachse (10) drehbeweglich miteinander verbunden sind.

2. Scherengestell (1) nach Anspruch 1,
**dadurch gekennzeichnet, dass**
eines (4) der beiden Scherenelemente (3, 4) das weitere (3) der beiden Scherenelemente (3, 4) umfasst.

3. Scherengestell (1) nach einem der vorangegangenen Ansprüche,
**dadurch gekennzeichnet, dass**
die beiden Scherenelemente (3, 4) um die gemeinsame Lagerachse (10), vorzugsweise um eine gemeinsame Steckachse (11), drehbar gelagert sind.

4. Scherengestell (1) nach einem der vorangegangenen Ansprüche,
**dadurch gekennzeichnet, dass**
zumindest eines der beiden Scherenelemente (3, 4), vorzugsweise beide Scherenelemente (3, 4), aus einem Halbzeug umformend hergestellt ist, vorzugsweise zumindest eines der beiden Scherenelemente (3, 4), vorzugsweise beide Scherenelemente (3, 4), als einteiliges Stanzblech- und/oder Biegeelement hergestellt ist.

5. Scherengestell (1) nach einem der vorangegangenen Ansprüche,
**dadurch gekennzeichnet, dass**
eines der beiden Scherenelemente (3, 4) eine Durchgangsöffnung (34) für einen Dämpfer (35) des Scherengestells (1) aufweist, durch welche hindurch der Dämpfer (35) anordenbar und/oder angeordnet ist.

6. Scherengestell (1) nach einem der vorangegangenen Ansprüche,
**gekennzeichnet durch**
eine Dämpfereinrichtung (36) mit einem Dämpfer (35), wobei der Dämpfer (35) ein innerhalb eines ersten Scherenelements (3) angeordnetes weiteres Scherenelement (4) durchdringt.

7. Scherengestell (1) nach einem der vorangegangenen Ansprüche,
**dadurch gekennzeichnet, dass**
das Scherengestell (1) ein oberes Abschlusselement (5) und ein unteres Abschlusselement (6) aufweist, an welchen einerseits jeweils eines der beiden Scherenelemente (3, 4) mittels eines Drehlagers (12, 13) rotatorisch und an welchen andererseits jeweils eines der beiden Scherenelemente (3, 4) mittels eines Gleitlagers (14, 15) zusätzlich translatorisch gelagert ist, wobei eine Dämpfereinrichtung (36) des Scherengestells (1) an einem (13) der Drehlager (13, 14), vorzugsweise an dem Drehlager (13) des unteren Abschlusselements (6), gelagert ist.

8. Scherengestell (1) nach einem der vorangegangenen Ansprüche,
**gekennzeichnet durch**
Lagereinrichtungen zum Lagern der Scherenelemente (3, 4) an und/oder in einem Abschlusselement (5, 6) des Scherengestells (1), wobei die Lagereinrichtungen jeweils ein Lagerauge (18, 19, 20, 21) und/oder einen Lagerzapfen (23, 24) aufweisen, welcher von einem der Scherenelemente (3, 4) und/oder von einem der Abschlusselemente (5, 6) ausgeformt ist, wobei das jeweilige Lagerauge (18, 19, 20, 21) und/oder der jeweilige Lagerzapfen (23, 24) einstückig mit einem der Scherenelemente (3, 4) und/oder mit einem der Abschlusselemente (5, 6) ausgebildet sind, und der jeweilige Lagerzapfen (23, 24) ein Gleitelement (25, 26) umfasst, und das Gleitelement (25, 26) auf den jeweiligen Lagerzapfen (23, 24) aufgesteckt ist.

9. Scherengestell (1) nach Anspruch 8,
**dadurch gekennzeichnet, dass**
der jeweilige Lagerzapfen (23, 24) und/oder ein Gleitelement (25, 26) des jeweiligen Lagerzapfens (23, 24) in Führungseinrichtungen (27, 28) der Abschlusselemente (5, 6) gelagert sind, wobei die Führungseinrichtungen (27, 28) Materialaussparungen (29, 30) eines oberen Abschlusselementes (5) oder eines unteren Abschlusselementes (6) des Scherengestells (1) sind.

10. Scherengestell (1) nach einem der vorangegangenen Ansprüche,
**dadurch gekennzeichnet, dass**
das Scherengestell (1) ein oberes Abschlusselement (5) und ein unteres Abschlusselement (6) aufweist, wobei das obere und/oder das untere Abschlusselement (5, 6) Führungseinrichtungen (27, 28) aufweisen, in welchen Lagerzapfen (23, 24) der Scherenelemente (3, 4) gleitend gelagert sind.

11. Scherengestell (1) nach einem der vorangegangenen Ansprüche,
**gekennzeichnet durch**
eine Verbindungseinrichtung (31) zum Verbinden eines der Scherenelemente (3, 4) mit einem der Abschlusselemente (5, 6), bei welchem ein erstes Verbindungselement (32) von dem Scherenelement (3, 4) und ein weiteres Verbindungselement (33) von dem Abschlusselement (5, 6) ausgeformt ist, wobei das erste Verbindungselement (32) in dem weiteren Verbindungselement (33) geführt ist.

12. Scherengestell (1) nach einem der vorangegangenen Ansprüche,
**gekennzeichnet durch**
eine Federeinrichtung (37) mit wenigstens einem Federelement (38, 39), wobei das Federelement (38, 39) zwischen einem (4) der Scherenelemente (3, 4) und einem (5) der Abschlusselemente (5, 6) angeordnet ist, wobei die Federeinrichtung (37) eine Federaufhängung (41) aufweist, welche an einem Ende (40) eines der Scherenelemente (3, 4) abrollbar angeordnet ist, wobei die Federaufhängung (41) einen gebogenen Grundkörper (42) aufweist, welcher um eine seiner Längsachsen gebogen ist, wobei die Federaufhängung (41) eine Nut (43) aufweist, in welcher das Scherenelement (4) mit einer Lasche (44) hineinragt, wobei die Federaufhängung (41) Federendaufnahmen (45, 46) aufweist, in welchen Federenden (47, 48) von Federelementen (38, 39) einhakbar sind.

13. Fahrzeugsitz, insbesondere Kraftfahrzeugsitz, mit einem Unterbau (2),
**dadurch gekennzeichnet, dass**
der Unterbau (2) ein Scherengestell (1) nach einem der Ansprüche 1 bis 12 aufweist.

14. Verfahren zum Herstellen eines Unterbaus (2) eines Fahrzeugsitzes, insbesondere eines Kraftfahrzeugsitzes, bei welchem ein erstes Scherenelement (3) mit einem weiteren Scherenelement (4) eines Scherengestells (1) des Unterbaus (2) drehbeweglich verbunden wird,
**dadurch gekennzeichnet, dass**
eines (3) der Scherenelemente (3, 4) durch die innere umlaufend geschlossenen Materialausnehmung (7) des weiteren (4) der Scherenelemente (3, 4) hindurch gesteckt wird und anschließend beide Scherenelemente (3, 4) unlösbar miteinander durch eine gemeinsame Lagerachse (10) verbunden werden.

## Claims

1. Scissors-type frame (1) for a vehicle seat, in particular for a motor vehicle seat, comprising a first scissors element (3) and a further scissors element (4), wherein the scissors-type frame (1) is height-adjustable by means of the two scissors elements (3, 4)
**characterised in that**
one of the two scissors elements (3, 4) has an inner peripherally closed material cut out (7) through which the other (3) of the two scissors elements (3, 4) penetrates the one (4) of the scissors elements (3, 4), wherein both scissors elements (3, 4) are permanently rotatably connected with one another by a common bearing axle (10).

2. Scissors-type frame (1) according to claim 1,
**characterised in that**
one (4) of the two scissors elements (3, 4) encompasses the other (3) of the scissors elements (3, 4).

3. Scissors-type frame (1) according of one of the preceding claims,
**characterised in that**
the two scissors elements (3, 4) are mounted such that they can rotate about the common bearing axle (10), preferably about a common push-in axle (11).

4. Scissors-type frame (1) according of one of the preceding claims,
**characterised in that**
at least on of the two scissors elements (3, 4), preferably both scissors elements (3, 4), is made by forming from a semi-finished product, preferably at least one of the two scissors elements (3, 4), preferably both scissors elements (3, 4), is produced as a one-piece punched sheet metal element and/or as an element made by bending.

5. Scissors-type frame (1) according to preceding claims,
**characterised in that**
one of the two scissors elements (3, 4) has a through opening (34) for a damper (35) of the scissors-type frame (1), through which the damper (35) can be and/or is arranged.

6. Scissors-type frame (1) according to one of the preceding claims,
**characterised by**
a damper device (36) with a damper (35), wherein the damper (35) passes through a further scissors element (4) arranged within a first scissors element (3).

7. Scissors-type frame (1) according to one of the preceding claims,
**characterised in that**
the scissors-type frame (1) comprises an upper terminal element (5) and a lower terminal element (6), on which on the one hand in each case one of the two scissors elements (3, 4) is mounted in a rotational manner by means of a rotary bearing (12, 13) and on which on the other hand in each case one of the scissors elements (3, 4) is additionally mounted in a translational manner by means of a sliding bearing (14, 15), wherein the damper device (36) of the scissors-type frame (1) is mounted on one (13) of the rotary bearing (13, 14), preferably on the rotary bearing (13) of the lower terminal element (6).

8. Scissors-type frame (1) according to one of the preceding claims,
**characterised by**
bearing devices for bearing the scissors elements (3, 4) against and/or in a terminal element (5, 6) of the scissors-type frame (1), wherein the bearing devices in each case comprise a bearing eye (18, 19, 20, 21) and/or a bearing pin (23, 24) which is formed by one of the scissors elements (3, 4) and/or by one of the terminal elements (5, 6), wherein the respective bearing eye (18, 19, 20, 21) and/or the respective bearing pin (23, 24) are formed in one piece with one of the scissors elements (3, 4) and/or with one of the terminal elements (5, 6), and the respective bearing pin (23, 24) comprises a sliding element (25, 26), and the sliding element (25, 26) is pushed onto the respective bearing pin (23, 24).

9. Scissors-type frame (1) according to claim 8,
**characterised in that**
the respective bearing pin (23, 24) and/or a sliding element (25, 26) of the respective bearing pin (23, 24) are mounted in guide devices (27, 28) of the terminal elements (5, 6), wherein the guide devices (27, 28) are material cutouts (29, 30) of an upper terminal element (5) or a lower terminal element (6) of the scissors-type frame (1).

10. Scissors-type frame (1) according to one of the preceding claims,
**characterised in that**
the scissors-type frame (1) comprises an upper terminal element (5) and a lower terminal element (6), wherein the upper and/or the lower terminal element (5, 6)
comprise guide devices (27, 28) in which bearing pins (23, 24) of the scissors elements (3, 4) are mounted in a sliding manner.

11. Scissors-type frame (1) according to one of the preceding claims,
**characterised by**
a connection device (31) for connecting one of the scissors elements (3, 4) to one of the terminal elements (5, 6) in which a first connection element (32) is formed from the scissors element (3, 4) and a further connection element (33) is formed from the terminal element (5, 6), wherein the first connection element (32) is guided in the further connection element (33).

12. Scissors-type frame (1) according to one of the preceding claims,
**characterised by**
a spring device (37) with at least one spring element (38, 39), wherein the spring element (38, 39) is arranged between one (4) of the scissors elements (3, 4) and one (5) of the terminal elements (5, 6), wherein the spring device (37) comprises a spring support (41) which is arranged in a roll-off manner at one end (40) of one of the scissors elements (3, 4), wherein the spring support (41) comprises a bent based body (42) which is bent about one of its longitudinal axes, wherein the spring support (41) comprises a notch (43) into which the scissors element (4) protrudes with a tab (44), wherein the spring support (41) comprises spring end holders (45, 46), into which spring ends (47, 48) of the spring elements (38, 39) can be hooked.

13. Vehicle seat, in particular a motor vehicle seat, with a substructure (2),
**characterised in that**
the substructure (2) comprises a scissors-type frame (1) according to one of the claims 1 to 12.

14. Method for producing a substructure (2) of vehicle seat, in particular of a motor vehicle seat, in which a first scissors element (3) is rotatably connected to a further scissors element (4) of the scissors-type frame (1) of the substructure (2),
**characterised in that**
one (3) of the scissors elements (3, 4) is pushed through the inner peripherally closed material cut out (7) of the further (4) of the scissors elements (3, 4) and then both scissors elements (3, 4) are non-detachably connected to one another by a common bearing axle (10).

## Revendications

1. Châssis en ciseau (1) pour un siège de véhicule, en particulier pour un siège de véhicule automobile, comprenant un premier élément de ciseau (3) et une autre élément de ciseau (4), le châssis en ciseau (1) étant réglable en hauteur au moyen des deux éléments de ciseau (3, 4),
**caractérisée en ce que**
l'un des deux éléments de ciseau (4) présente une partie évidée (7) dans le matériau, interne et fermée sur tout le pourtour, par laquelle l'autre (3) des deux éléments de ciseau (3, 4) traverse le un (4) des deux éléments de ciseau (3, 4), les deux éléments de ciseau (3, 4) étant reliés entre eux, de manière indétachable, par un axe de palier commun (10) pivotant.

2. Châssis en ciseau (1) selon la revendication 1,
**caractérisée en ce que**
l'un (4) des deux éléments de ciseau (3, 4) enserre l'autre (3) des deux éléments de ciseaux (3, 4).

3. Châssis en ciseau (1) selon l'une quelconque des revendications précédentes,
**caractérisée en ce que**
les deux éléments de ciseau (3, 4) sont montés pivotants autour de l'axe de palier commun (10), de préférence autour d'un arbre de roue commun (11).

4. Châssis en ciseau (1) selon l'une quelconque des revendications précédentes,
**caractérisée en ce que**
au moins l'un des deux éléments de ciseau (3, 4), de préférence les deux éléments de ciseau (3, 4), est ou sont fabriqués à partir d'un semi-produit par façonnage, **en ce que** de préférence, au moins un des deux éléments de ciseau (3, 4), de préférence les deux éléments de ciseau (3, 4) est ou sont fabriqué(s) sous forme d'un élément de tôle pour estampage et/ou d'un élément flexible.

5. Châssis en ciseau (1) selon l'une quelconque des revendications précédentes,
**caractérisée en ce que**
l'un des deux éléments de ciseau (3, 4) présente une ouverture de passage (34) pour un amortisseur (35) du châssis en ciseau (1), lequel amortisseur pouvant être positionné ou étant positionné de façon à passer au travers de ladite ouverture.

6. Châssis en ciseau (1) selon l'une quelconque des revendications précédentes,
**caractérisée par**
un dispositif d'amortisseur (36) avec un amortisseur (35), l'amortisseur (35) passant au travers d'un autre élément de ciseau (3) positionné au sein d'un premier élément de ciseau (4).

7. Châssis en ciseau (1) selon l'une quelconque des revendications précédentes,
**caractérisée en ce que**
le châssis en ciseau (1) présente un élément de clôture supérieur (5) et un élément de clôture inférieur (6), sur lesquels, d'une part, respectivement l'un des deux éléments de ciseau (3, 4) est monté pivotant au moyen d'un palier pivotant (12, 13) et sur lesquels, d'autre part, respectivement l'un des éléments de ciseau (3, 4) est monté, en outre, pour un mouvement de translation au moyen d'un palier lisse (14, 15), un dispositif d'amortisseur (36) du châssis en ciseau (1) étant logé au niveau d'un (13) des paliers pivotants (13, 14), de préférence au niveau du palier pivotant (13) de l'élément de clôture inférieur (6).

8. Châssis en ciseau (1) selon l'une quelconque des revendications précédentes,
**caractérisée par**
des dispositifs de palier pour le positionnement des éléments de ciseau (3, 4) au niveau de et/ou dans un élément de clôture (5, 6) du châssis en ciseau (1), dans lequel les dispositifs de palier présentent respectivement un oeillet de palier (18, 19, 20, 21) et/ou un tourillon de palier (23, 24), qui est formé par un des éléments de ciseau (3, 4) et/ou par un des éléments de clôture (5, 6), l' oeillet de palier respectif (18, 19, 20, 21) et/ou le tourillon de palier respectif (23, 24) étant formé(s) d'un seul tenant avec l'un des éléments de ciseau (3, 4) et/ou l'un des éléments de clôture (5, 6) et le tourillon de palier respectif (23, 24) comprenant un élément glissant (25, 26), lequel élément glissant (25, 26) s'emboîte sur le tourillon respectif (23, 24).

9. Châssis en ciseau (1) selon la revendication 8,
**caractérisée en ce que**
le tourillon de palier respectif (23, 24) et/ou un élément glissant (25, 26) du tourillon respectif (23, 24) est ou sont logé(s) dans des dispositifs de guidage (27, 28) des éléments de clôture (5, 6), dans lequel les dispositifs de guidage (27, 28) sont des parties évidées dans le matériau (29, 30) d'un élément de clôture supérieur (5) ou d'un élément de clôture inférieur (6) du châssis en ciseau (1).

10. Châssis en ciseau (1) selon l'une quelconque des revendications précédentes,
**caractérisée en ce que**
le châssis en ciseau (1) présente un élément de clôture supérieur (5) et un élément de clôture inférieur (6), dans lequel l'élément de clôture supérieur et/ou l'élément de clôture inférieur (5, 6) présente(nt) des dispositifs de guidage (27, 28), dans lesquels des tourillons de palier (23, 24) des éléments de ciseau (3, 4) sont logés pour un mouvement de coulissement.

11. Châssis en ciseau (1) selon l'une quelconque des revendications précédentes,
**caractérisée par**
un dispositif de raccordement (31) pour relier l'un des éléments de ciseau (3, 4) à l'un des éléments de clôture (5, 6), dans lequel un premier élément de raccordement (32) est formé par l'élément de ciseau (3, 4) et un autre élément de raccordement (33) par l'élément de clôture (5, 6), le premier élément de raccordement (32) étant guidé dans l'autre élément de raccordement (33).

12. Châssis en ciseau (1) selon l'une quelconque des revendications précédentes,
**caractérisée par**
un dispositif à ressort (37) avec au moins un élément à ressort (38, 39), dans lequel l'élément à ressort (38, 39) est positionné entre l'un (4) des éléments de ciseau (3, 4) et l'un (5) des éléments de clôture (5, 6), dans lequel le dispositif à ressort (37) présente une suspension à ressort (41) qui est positionné, pour permettre un mouvement de glissement, au niveau d'une extrémité (40) de l'un des éléments de ciseaux (3, 4), dans lequel la suspension à ressort (41) présente un corps de base courbé (42) qui est recourbé autour d'un de ses axes longitudinaux, dans lequel la suspension à ressort (41) présente une rainure (43), dans laquelle pénètre l'élément de ciseau (4) avec un collier (44), la suspension à ressort (41) présentant des logements d'extrémité pour ressorts (45, 46), dans lesquels logements peuvent être accrochés des extrémités de ressort (47, 48) des éléments à ressort (38, 39).

13. Siège de véhicule, en particulier siège de véhicule automobile, avec un bâti (2),
**caractérisé en ce que**
le bâti (2) présente un châssis en ciseau (1) selon l'une quelconque des revendications 1 à 12.

14. Procédé de fabrication d'un bâti (2) de siège de véhicule, en particulier d'un siège de véhicule automobile, dans lequel un premier élément de ciseau (3) est relié, pivotant, à un autre élément de ciseau (4) d'un châssis en ciseau (1) du bâti (2),
**caractérisé en ce que**
l'on emboîte l'un (3) des éléments de ciseau (3, 4) en le faisant passer au travers de la partie vidée dans le matériau, interne et fermée sur tout le pourtour, située dans l'autre (4) des éléments de ciseau (3, 4) et **en ce que** l'on relie, ensuite, les deux éléments de ciseau (3, 4) entre eux, de manière indétachable, par un axe de palier commun (10).
